# EUROPEAN PATENT SPECIFICATION

(11) **EP 2 628 665 B1**
(45) Date of publication and mention of the grant of the patent: **25.11.2015**
(21) Application number: 11832372.4
(22) Date of filing: 13.09.2011
(51) Int. Cl.: B62D 25/20

(54) **VEHICLE BODY FLOOR STRUCTURE**
BODENKONSTRUKTION FÜR EINE FAHRZEUGKAROSSERIE
STRUCTURE DE PLANCHER DE CORPS DE VEHICULE

(30) Priority: 13.10.2010 JP 2010230989
(43) Date of publication of application: 21.08.2013
(73) Proprietor: Honda Motor Co., Ltd., Minato-ku Tokyo 107-8556 (JP)
(72) Inventor: YASUHARA, Shigeto, Wako-shi Saitama 351-0193 (JP); KOMINAMIDATE, Masami, Wako-shi Saitama 351-0113 (JP); SHIRASAYA, Masahito, Wako-shi Saitama 351-0113 (JP)
(74) Representative: Weickmann & Weickmann
(86) International application number: PCT/JP2011/070860
(87) International publication number: WO 2012/049933

(56) References cited:
- WO-A1-2007/094328
- FR-A1- 2 937 930
- JP-A- 10 119 826
- JP-A- 2006 015 770
- JP-A- 2006 096 186
- JP-A- 2006 321 315
- JP-A- 2007 284 003
- JP-A- 2007 284 003
- JP-U- H0 680 987
- JP-U- 62 088 660
- US-A1- 2009 001 769

## Description

### Technical Field

The present invention relates to a vehicular floor structure including a floor frame, a cross member connected to a rear end portion of the floor frame, and a floor panel cooperating with the floor frame to define a closed cross sectional structure.

### Background Art

A vehicular floor structure includes left and right front side frames and left and right floor frames extending from respective rear end portions of the left and right front side frames in a rear direction of a vehicular body. The floor frames have rear end portions connected to a cross member. Each of the floor frames includes an inner wall facing laterally inwardly of the vehicular body, an outer wall facing laterally outwardly of the vehicular body, and a bottom wall. The inner and outer walls and the bottom wall define a generally U-shaped cross-section, and the floor frame and a floor panel carried on the floor frame define a closed cross-section (see Patent Literature 1).

Some vehicular floor structure has a U-shaped cross-sectional floor frame separated into front and rear floor frames. To assemble such a vehicular floor structure, first, the rear floor frame is spot welded to a cross member. The rear floor frame is spot welded to a floor panel and a front end portion of the rear floor frame overlaps a rear end portion of the front floor frame.

The front end portion of the rear floor frame and the rear end portion of the front floor frame overlap to form the floor frame. The floor frame is coupled to the floor panel such that the floor frame and the floor panel define a closed cross-section.

However, it is difficult to spot weld the front and rear end portions of the floor frames together after the front and rear end portions are brought into overlapping relationship with each other. To address this problem, a welded nut is coupled to the rear end portion of the front floor frame and tightened onto a bolt to fasten the overlapping front and rear end portions together.

When a load is applied from the front floor frame to the rear floor frame, the load is concentrated on the front and rear end portions fastened together by the bolt and nut. The concentration of the load on the front and rear end portions fastened together by the bolt and nut would cause bottoms of the front and rear floor frames to bend about the front and rear end portions fastened together by the bolt and nut.

The front and rear floor frames having the front and rear end portions fastened together by the bolt and nut need to be configured to efficiently transmit a load from the front floor frame to the rear floor frame. The efficient transmission of the load from the front floor frame to the rear floor frame results in the load transmitted to the rear floor frame being borne by the cross member in a preferred manner.

### Prior Art Literature

Patent Literature:
Patent Literature 1: JP-A-2006-321315

Document US 2009/0001769 A1 discloses a vehicle floor structure comprising front side frames; a floor frame extending rearwardly from each of rear end portions of the front side frames, the floor frame having inner and outer sidewalls facing laterally inwardly and outwardly of a vehicular body, and a cross member connected to a rear end portion of the floor frame.

Document JP 2007-284003 A discloses the preamble of claim 1.

### SUMMARY OF INVENTION

### Technical Problem

An object of the present invention is to provide a vehicular floor structure designed such that a load applied to a front end portion of a floor frame in a rear direction of a vehicular body can be efficiently transmitted to a cross member and the load can be borne by the cross member in a preferred manner.

This object is solved according to the invention by a vehicle floor structure according to claim 1. Preferred embodiments of the invention are described in the dependent claims.

### Solution to Problem

According to one aspect of the present invention, as defined in claim 1, there is provided a vehicle floor structure comprising: front side frames; a floor frame extending rearwardly from each of rear end portions of the front side frames, the floor frame having inner and outer sidewalls facing laterally inwardly and outwardly of a vehicular body, and a bottom wall, the inner and outer walls and the bottom wall defining a generally U-shaped cross-section; a cross member connected to a rear end portion of the floor frame; a floor panel carried on the floor frame; a closed cross-sectional structure defined by the floor frame and the floor panel carried on the floor frame; a fastening member fastening the bottom wall of the floor frame at the rear end portion of the floor frame to a bottom wall of the cross member, the bottom wall of the floor frame overlapping the bottom wall of the cross member, the bottom wall of the floor frame having a tightened portion tightened by the fastening member; downwardly projecting linear beads disposed laterally internally and externally of the tightened portion, wherein the linear beads project downwardly such that the fastened portion is recessed relative to the linear beads.

In addition, as defined in claim 1, the linear beads are formed along ridges of the floor frame.

Preferably, as defined in claim 2, the linear beads have bottom walls located lower than a head of the fastening member.

Preferably, as defined in claim 3; the linear beads are formed throughout a length between a front end portion of the floor frame and the rear end portion of the floor frame.

In addition, as defined in claim 1, the floor panel has downwardly projecting panel beads located rearwardly of the cross member, the panel beads each continuously extending rearwardly from rear ends of the linear beads.

Preferably, as defined in claim 4, the floor frame underlies the floor panel and the cross member in overlapping relationship with the floor panel and the cross member with the cross member being sandwiched between the floor panel and the floor frame, the inner and outer sidewalls of the floor frame being spot welded to the floor panel, the bottom wall of the floor frame at the rear end portion of the floor frame being fastened to the bottom wall of the cross member by the fastening member.

Preferably, as defined in claim 5, the fastening member is a bolt tightened by a nut disposed on an outer surface of the bottom wall of the cross member.

Preferably, as defined in claim 6, the floor frame has a linear central bead extending toward a head of the fastening member between the linear beads.

Preferably, as defined in claim 7, the tightened portion is provided at a location corresponding to the bottom wall of the cross member.

### Advantageous Effects of Invention

As defined in claim 1, the bottom wall of the floor frame is fastened at the rear end portion of the floor frame by a bolt to the bottom wall of the cross member in overlapping relationship with the bottom wall of the cross member, and the downwardly projecting linear beads are disposed laterally internally and externally of the tightened portion. The linear beads projecting downward reinforce the tightened portion.

A load applied to the front end portion of the floor frame in a rear direction of the vehicular body can thus be efficiently transmitted to the tightened portion. The load transmitted to the tightened portion can be efficiently transmitted through the bolt to the cross member. This means that the load can be borne by dispersion into the cross member.

As defined in claim 1, the linear beads are formed along the ridges of the floor frame. The ridges of the floor frame are highly rigid to withstand a load directed longitudinally of the vehicular body. The linear beads are highly rigid due to the ridges, such that a load applied to the front end portion of the floor frame in the rear direction of the vehicular body can be more efficiently transmitted from the tightened portion through the bolt to the cross member.

One of various types of vehicles may be constructed such that the floor frame is not coupled to the front floor panel. Even in this case, the load applied to the front end portion of the floor frame can be efficiently transmitted by the linear beads because the linear beads are highly rigid due to the ridges.

As defined in claim 2, the bottom wall of the linear bead is located below a head of the bolt. The head of the bolt is received between the linear beads such that the head of the bolt is not located lower than the linear beads. The head of the bolt is thus protected by the linear beads.

As defined in claim 3, the linear bead linearly extends throughout the length between the front end portion of the floor frame and the rear end portion of the floor frame. The linear bead defines a flat portion of the bottom wall of the floor frame, which portion extends longitudinally of the vehicular body. This makes it possible to adjust an air flowing along the bottom wall of the right floor frame.

By extending throughout the length from the front end portion to the rear end portion of the floor frame, the linear bead can more efficiently transmit a load applied to the front end portion of the floor frame.

As defined in claim 1, the floor panel has the downwardly projecting panel beads located rearwardly of the cross member, and the panel beads each continuously extend rearwardly from the rear ends of the linear beads.

Generally, a vehicular floor structure includes a plurality of cross members arranged at given intervals longitudinally of a vehicular body. That is, behind a cross member to which a bottom wall of a floor frame is fastened, there is another cross member (hereinafter referred to as a "rear cross member"). The panel bead extends rearwardly of the vehicular body. More specifically, the panel bead is interposed between the rear cross member and the rear end portion of the linear bead.

With the floor frame, the cross member, the rear cross member, and the panel bead arranged in the manner discussed above, part of a load applied to the front end portion of the floor frame can be efficiently transmitted from the tightened portion through the bolt to the cross member, after which the rest of the load can be transmitted through the panel bead to the rear cross member. This means that the load applied to the front end portion of the floor frame can be borne in a preferred manner by dispersion into the two cross members.

As defined in claim 4, the inner and outer sidewalls of the floor frame are spot welded to the floor panel, and the bottom wall of the floor frame is fastened to the bottom wall of the cross member by the bolt. The cross member is coupled to the floor panel to form a closed cross-sectional structure defined by the cross member and the floor panel. Since it is difficult to spot weld the bottom wall of the floor frame to the bottom wall of the cross member, the bottom wall of the floor frame is fastened to the bottom wall of the cross member by the bolt. That is, attachment of the bottom wall of the floor frame to the bottom wall of the cross member is easily effected, thereby facilitating assemblage of the vehicular floor structure.

As defined in claim 5, the nut tightening the bolt is disposed on an outer surface of the bottom wall of the cross member in such a manner as to project downwardly from the bottom wall. The bottom wall of the floor frame is spaced downwardly from the bottom wall of the cross member so as to receive the projecting nut inside the floor frame.

The rear end portion of the floor frame cooperates with the cross member to form a closed cross-sectional structure of larger area than that of a closed cross-sectional structure formed by the overlapping bottom walls of the floor frame and the cross member. The larger area of the closed cross-sectional structure increases rigidity of the closed cross-sectional structure formed by the rear end portion of the floor frame and the cross member, such that a load applied to the front end portion of the floor frame in the rear direction of the vehicular body can be more efficiently transmitted to the cross member without deforming the rear end portion of the floor frame.

As defined in claim 6, the linear central bead extends toward the head of the bolt between the linear beads. Part of a load applied to the front end portion of the floor frame in the rear direction of the vehicular body can be efficiently transmitted through the central linear bead to the head of the bolt. Thereafter, the load can be more efficiently transmitted through the bolt to the cross member.

As defined in claim 7, the tightened portion (i.e., recessed portion) is formed at the location corresponding to the bottom wall of the cross member, and is smaller in size. This increases rigidity of the floor frame, such that a load applied to the front end portion of the floor frame in the rear direction of the vehicular body can be more efficiently transmitted to the cross member.

### BRIEF DESCRIPTION OF DRAWINGS

Fig. 1 is a bottom view of a vehicular floor structure according to a first embodiment of the present invention;
Fig. 2 is an enlarged view of an area 2 of Fig. 1;
Fig. 3 is a perspective view showing a right floor frame and a central cross member of Fig. 1;
Fig. 4 is an exploded perspective view of the right floor frame of Fig. 3;
Fig. 5 is a cross-sectional view taken along line 5-5 of Fig. 3;
Fig. 6 is a cross-sectional view taken along line 6-6 of Fig. 2;
Fig. 7 is a view taken in a direction of an arrow 7 of Fig. 4;
Fig. 8 is a cross-sectional view taken along line 8-8 of Fig. 3;
Fig. 9 is a view showing how to assemble the right floor frame to a front floor panel and the central cross member according to the first embodiment;
Fig. 10 is a view showing a load F1 applied to the front floor panel being transmitted to the central cross member;
Fig. 11 is a cross-sectional view showing a vehicular floor structure according to a second embodiment;
Fig. 12 is a cross-sectional view showing a vehicular floor structure according to a third embodiment;
Fig. 13 is a perspective view showing a vehicular floor structure according to a fourth embodiment;
Fig. 14 is a bottom view showing a vehicular floor structure according to a fifth embodiment; and
Fig. 15 is a bottom view showing a vehicular floor structure according to a sixth embodiment.

### DESCRIPTION OF EMBODIMENTS

Certain preferred embodiments showing aspects of the present invention and embodiments 4 and 5 showing the present invention are described below with reference to the accompanying drawings.

### Embodiment 1

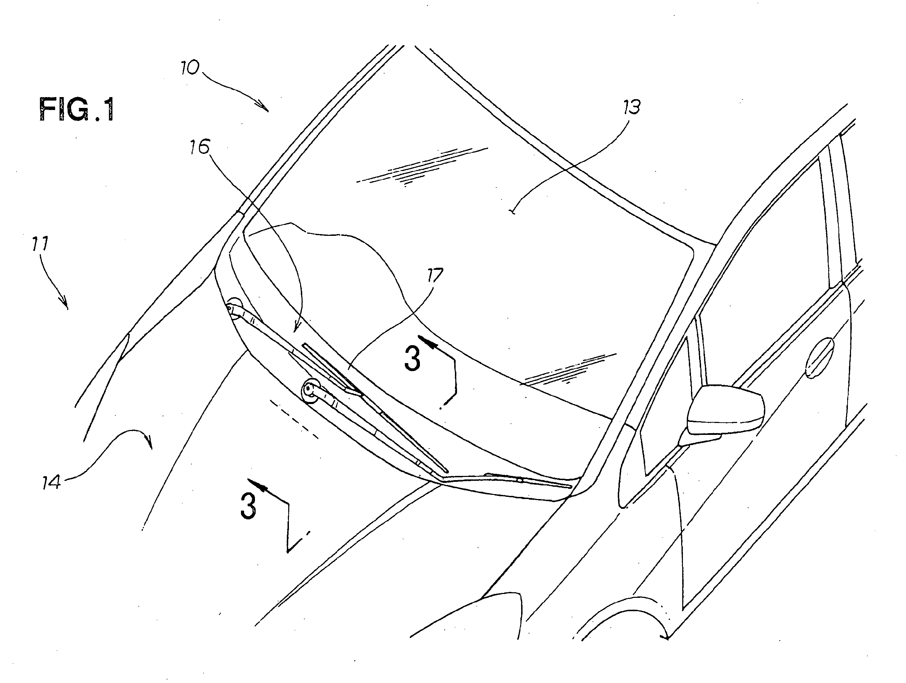

As shown in Fig. 1, a vehicular floor structure 10 includes an outer skeletal assembly 11 defining an outer frame of a vehicular floor, and an inner skeletal assembly 12 disposed inside the outer skeletal assembly 11.

The outer skeletal assembly 11 includes left and right front side frames 15, 15 extending longitudinally of a vehicular body, and left and right outriggers 17, 17 projecting outward from respective rear end portions 15a, 15a of the left and right front side frames 15, 15. The outer skeletal assembly 11 also includes left and right side sills 18, 18 extending from respective outer end portions of the left and right outriggers 17, 17 in a rear direction of the vehicular body. The outer skeletal assembly 11 further includes left and right rear frames 21, 21 extending from respective rear end portions of the left and right side sills 18, 18 in the rear direction of the vehicular body.

Additionally, the outer skeletal assembly 11 includes left and right front pillars 23, 23 extending upward from respective front end portions of the left and right side sills 18, 18, and left and right upper frames 24, 24 extending from the left and right front pillars 23, 23 in a forward direction of the vehicular body.

Between the left front side frame 15 and the left upper frame 24, there is provided a left wheelhouse 25. Provided between the right front side frame 15 and the right upper frame 24 is a right wheelhouse 25. A dashboard 26 is provided between the left and right outriggers 17, 17.

The inner skeletal assembly 12 includes a front cross member 31 extending between and interconnecting the front end portions of the left and right side sills 18, 18. The inner skeletal assembly 12 also includes a central cross member (cross member) 33 disposed rearwardly of the front cross member 31. The inner skeletal assembly 12 further includes a rear cross member 35 disposed rearwardly of the central cross member 33. In addition, the inner skeletal assembly 12 includes a left floor frame 38 extending from the rear end portion 15a of the left front side frame 15 in a rear direction of the vehicular body, and a right floor frame 38 extending from the rear end portion 15a of the right front side frame 15 in the rear direction of the vehicular body.

The front cross member 31 is an open-topped reinforcement member having front and rear walls 31a, 31b and a bottom wall 31c which jointly define a generally U-shaped cross-section. The front cross member 31 extends laterally of the vehicular body and interconnects the front end portions of the left and right side sills 18, 18.

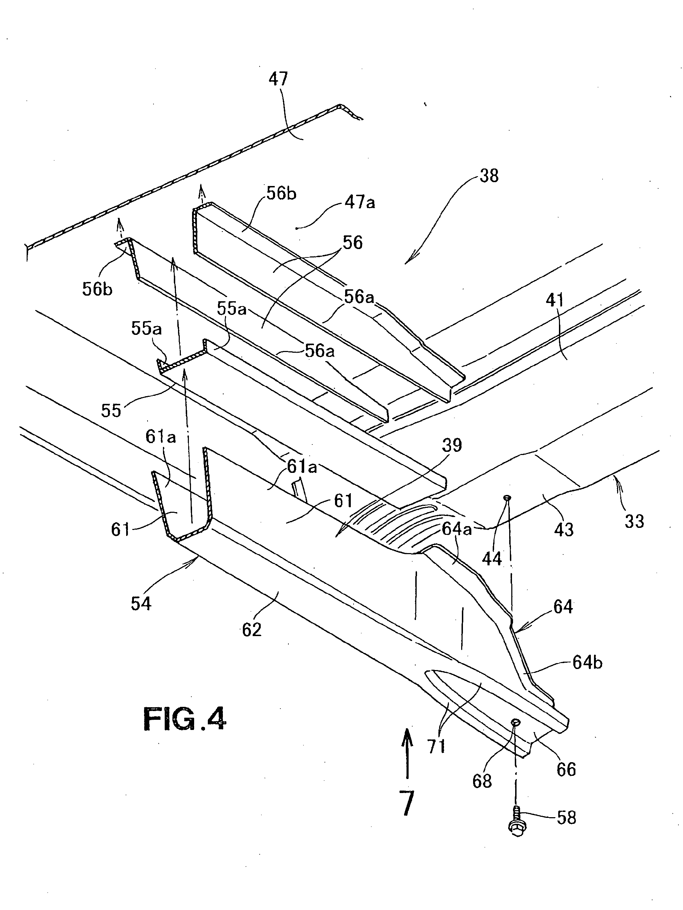

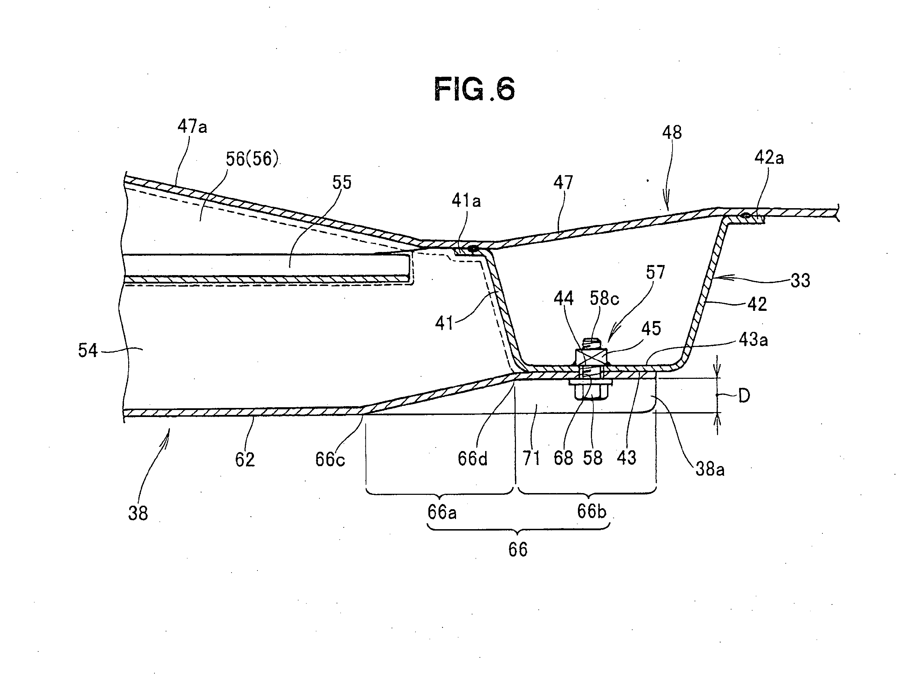

Like the front cross member 31, the central cross member 33 is an open-topped reinforcement member having front and rear walls 41, 42 and a bottom wall 43 which jointly define a generally U-shaped cross-section. The central cross member 33 extends laterally of the vehicular body and interconnects respective centers 18a, 18a of the left and right side sills 18, 18. The bottom wall 43 of the central cross member 33 has an attachment hole 44 (Figs. 4 and 6). As shown in Fig. 6, a welded nut 45 is coupled to an inner surface 43a of the bottom wall 43. The welded nut 45 is coaxial with the attachment hole 44 of the bottom wall 43.

As shown in Fig. 1, a front floor panel 47 is carried on tops of the front cross member 31 and the central cross member 33 as well as on tops of the left and right floor frames 38, 38. The front cross member 31 and the front floor panel 47 carried on the front cross member 31 jointly define a closed cross-sectional structure.

The central cross member 33 and the front floor panel 47 carried on the central cross member 33 jointly define a closed cross-sectional structure 48 (Fig. 6). More specifically, as shown in Fig. 6, the central cross member 33 has front and rear joining flanges 41a, 42a spot welded to the front floor panel 47 carried on the top of the central cross member 33. By the spot welding of the flanges 41a, 42a to the front floor panel 47, the central cross member 33 is attached to the front floor panel 47 and cooperates with the front floor panel 47 to define the closed cross-sectional structure 48.

Similarly to the front cross member 31, as shown in Fig. 1, the rear cross member 35 is an open-topped reinforcement member having front and rear walls 35a, 35b and a bottom wall 35c which jointly define a generally U-shaped cross-section. The rear cross member 35 extends laterally of the vehicular body and interconnects respective front end portions 21a, 21a of the left and right rear frames 21, 21. A rear floor panel 51 is carried on tops of the central cross member 33 and the rear cross member 35. The rear cross member 35 and the rear floor panel 51 carried on the rear cross member 35 jointly define a closed cross-sectional structure.

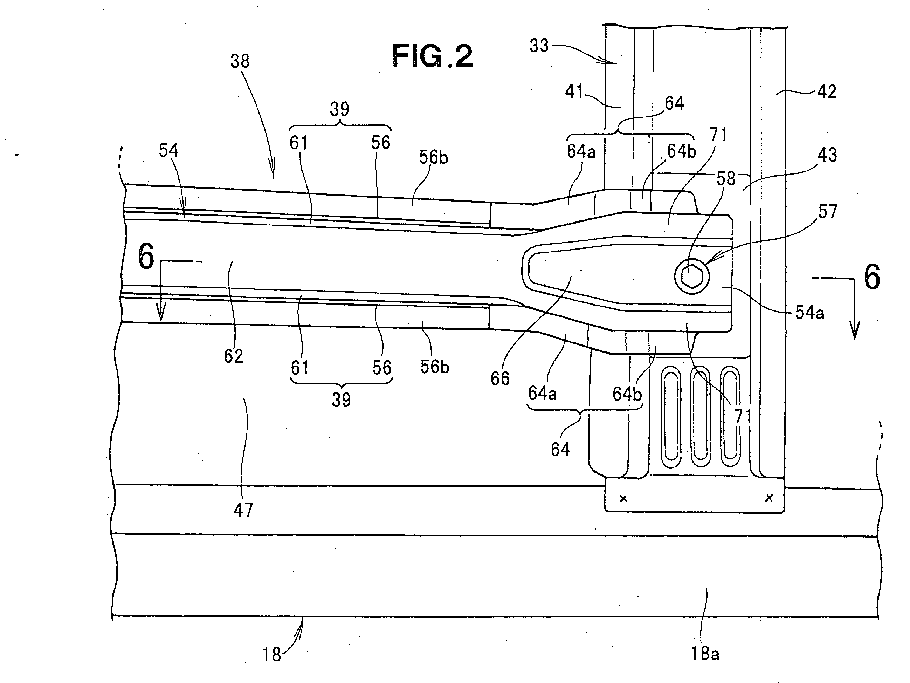

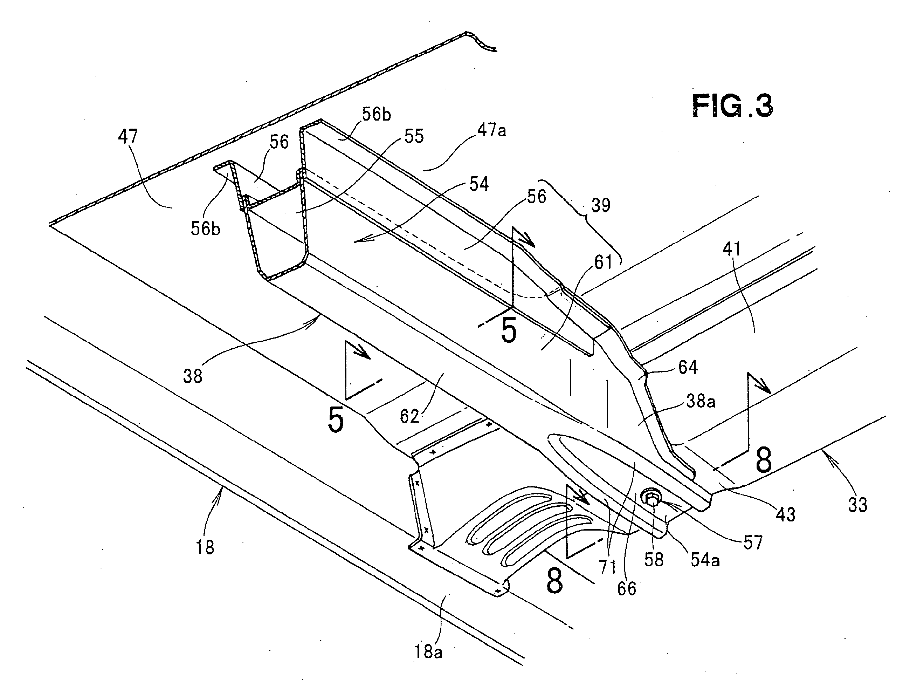

As shown in Figs. 2 and 3, the right floor frame 38 includes a floor frame body 54 extending from the rear end portion 15a of the right front side frame 15 in the rear direction of the vehicular body. The right floor frame 38 also includes a frame lid 55 provided on the floor frame body 54. The right floor frame 38 further includes frame legs 56, 56 facing laterally inwardly and outwardly of the vehicular body and interconnecting the floor frame body 54 and the front floor panel 47. The right floor frame 38 is provided with fastening means 57 for fastening a rear end portion 54a of the floor frame body 54 to the central cross member 33. The frame leg 56 facing laterally inwardly of the vehicular body and the frame leg 56 facing laterally outwardly of the vehicular body are hereinafter referred to as "an inner frame leg 56" and "an outer frame leg 56", respectively.

The right floor frame 38 is arranged such that an impact load applied to a front side of the vehicular body in the rear direction of the vehicular body can be transmitted through the right front side frame 15 and then a front end portion 38b (Fig. 1) of the right floor frame 38 to a rear end portion 38a of the right floor frame 38.

The fastening means 57 includes the welded nut 45 (Fig. 6) welded to the inner surface 43a of the bottom wall 43 of the central cross member 33. The fastening means 57 also includes a fastening bolt (fastening member) 58 threadedly engaged with the welded nut 45.

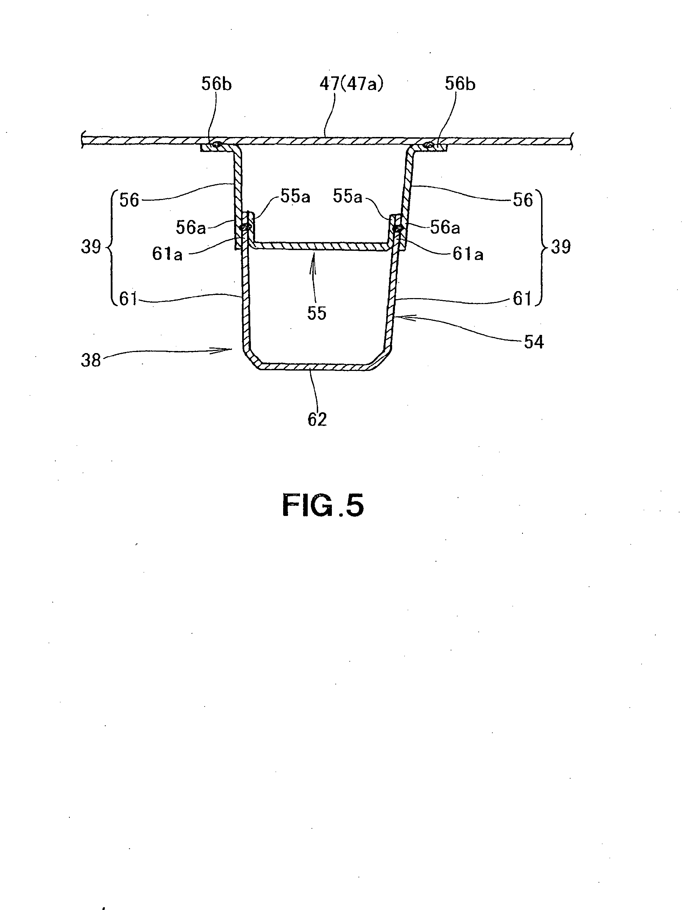

As shown in Figs. 4 and 5, the floor frame body 54 includes sidewalls 61, 61 facing laterally inwardly and outwardly of the vehicular body and a bottom wall 62. The sidewalls 61, 61 and the bottom wall 62 jointly define a generally U-shaped cross-section. The sidewall 61 facing laterally inwardly of the vehicular body and the sidewall 61 facing laterally outwardly of the vehicular body are hereinafter referred to as "an inner sidewall 61" and "an outer sidewall 61", respectively.

The inner frame leg 56 and the inner sidewall 61 jointly define an inner sidewall 39 of the right floor frame 38. The inner sidewall 39 faces laterally inwardly of the vehicular body. The outer frame leg 56 and the outer sidewall 61 define an outer sidewall 39 of the right floor frame 38. The outer sidewall 39 faces laterally outwardly of vehicular body.

The frame lid 55 interconnects top end portions 61a, 61a of the inner and outer sidewalls 61, 61 to close the floor frame body 54. The inner frame leg 56 has a lower end portion 56a connected to the top end portion 61a of the inner sidewall 61. The outer frame leg 56 has a lower end portion 56a connected to the top end portion 61a of the outer sidewall 61.

An inner joining flange 55a of the frame lid 55, the top end portion 61a of the inner sidewall 61, and the lower end portion 56a of the inner frame leg 56 are spot welded to one another. An outer joining flange 55a of the frame lid 55, the top end portion 61a of the outer sidewall 61, and the lower end portion 56a of the outer frame leg 56 are spot welded to one another.

The frame lid 55 and the inner and outer frame legs 56, 56 are coupled to the floor frame body 54, thereby defining the right floor frame 38. The right floor frame 38 is attached to the front floor panel 47 by spot welding the respective joining flanges 56b, 56b of the inner and outer frame legs 56, 56 to the front floor frame 47.

As shown in Fig. 6, the front floor panel 47 has an upward slope 47a located forwardly of the central cross member 33 to provide a recessed shape of the front floor panel 47. The central cross member 33 is recess-shaped to enable a member such as a fuel tank to be disposed below the front floor panel 47. By virtue of the inner and outer frame legs 56, 56 of the right floor frame 38, the right floor frame 38 can be coupled to the front floor panel 47 by spot welding despite the central cross member 33 being recessed-shaped.

As shown in Figs. 2 and 4, the inner sidewall 61 of the floor frame body 54 has a rear end portion defining an inwardly projecting flange 64 including a first portion 64a adapted to abut on the front floor panel 47 and a second portion 64b adapted to abut on the front wall 41 and the bottom wall 43 of the central cross member 33.

Similarly to the inner sidewall 61, the outer sidewall 61 of the floor frame body 54 has a rear end portion defining an outwardly projecting flange 64 including a first portion 64a adapted to abut on the front floor panel 47 and a second portion 64b adapted to abut on the front wall 41 and the bottom wall 43 of the central cross member 33.

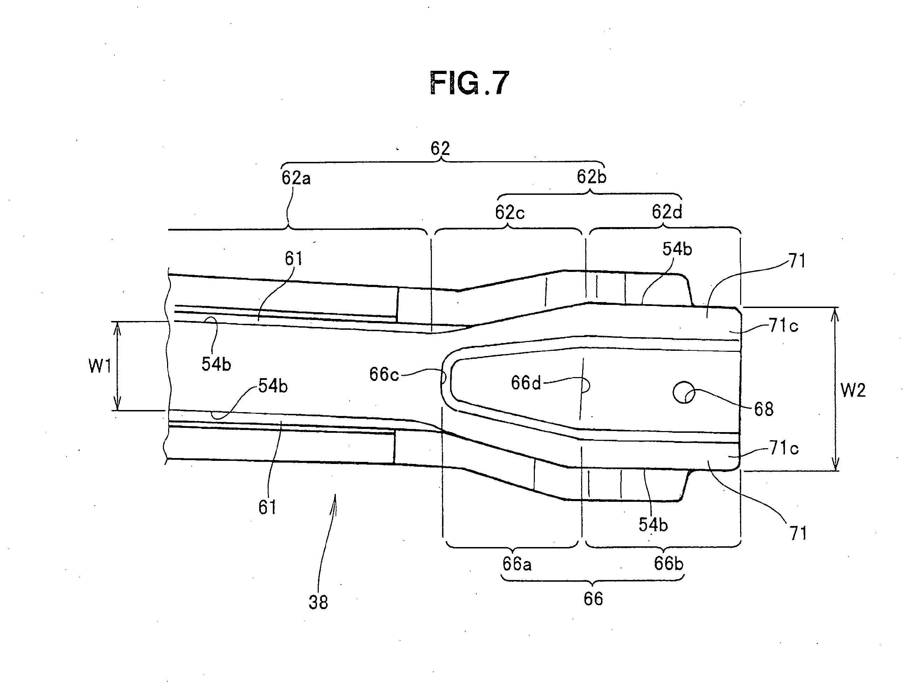

As shown in Fig. 7, the bottom wall 62 includes a main portion 62a of width W1. The bottom wall 62 also includes a rear end portion 62b having a front half 62c of width gradually increasing from the width W1 to a width W2, and a widened rear half 62d of width W2. The rear end portion 62b of the bottom wall 62 includes a tightened portion 66 formed laterally centrally thereof, and inner and outer linear beads 71, 71 formed laterally internally and externally of the tightened portion 66. The inner linear bead 71 faces laterally inwardly of the vehicular body. The outer linear bead 71 faces laterally outwardly of the vehicular body.

As shown in Figs. 6 and 7, the tightened portion 66 is a recess formed laterally centrally of the rear end portion 62b of the bottom wall 62 and extends in the rear direction of the vehicular body. The tightened portion 66 includes a front half 66a and a rear half 66b. The recess of the front half 66a is sloped so that a depth D of the recess gradually increases from a front end 66c of the tightened portion 66 to a center 66d of the tightened portion 66. The rear half 66b has a recess of fixed depth D which is the largest depth in the tightened portion 66. The rear half 66b has an attachment hole 68 formed therethrough.

The rear end portion 62b of the bottom wall 62 (the rear half 66b of the tightened portion 66) overlaps the bottom wall 43 of the central cross member 33 with the attachment hole 68 of the tightened portion 66 being coaxial with the attachment hole 44 of the bottom wall 43. The fastening bolt 58 is inserted through the attachment holes 44, 68 with a shank 58c of the bolt 58 threadedly engaged with the welded nut 45.

The rear end portion 62b of the bottom wall 62 (i.e., the tightened portion 66 of the rear end portion 62b) is fastened to the bottom wall 43 of the central cross member 33 by the fastening bolt 58 in overlapping relationship with the bottom wall 43. That is, the rear end portion 38a of the right floor frame 38 is fastened to the central cross member 33 by the fastening bolt 58.

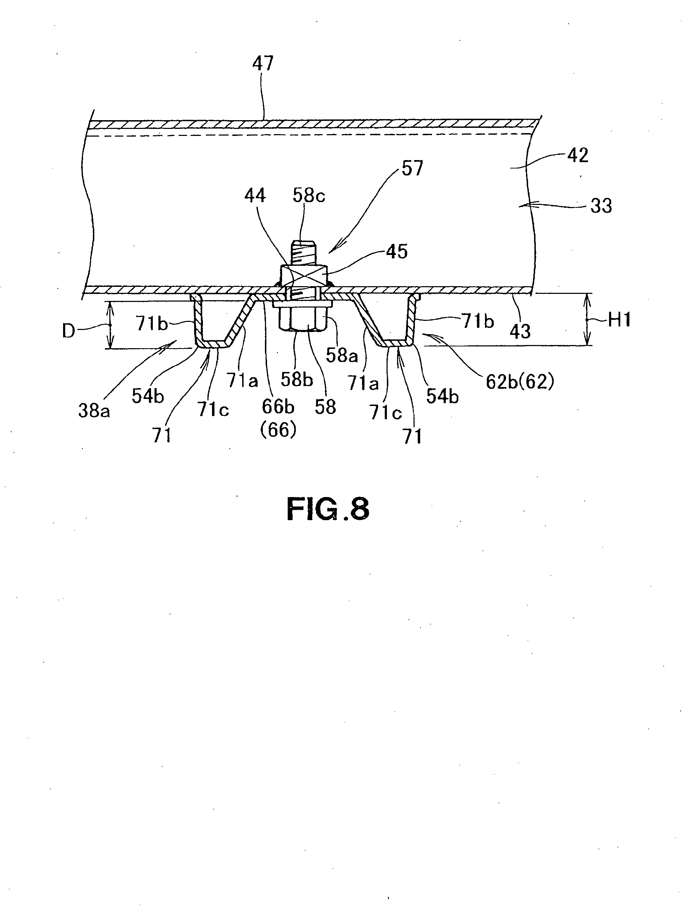

As shown in Figs. 7 and 8, the linear beads 71, 71 formed internally and externally of the tightened portion 66 formed in the rear end portion 62b project downwardly. The downward projection of the linear beads 71, 71 makes the tightened portion 66 recessed a depth D from the linear beads 71, 71. The downward projecting linear beads 71, 71 formed internally and externally of the tightened portion 66 reinforce the tightened portion 66.

The linear beads 71, 71 are reinforcing ribs linearly extending along lateral inner and outer ridges 54b, 54b of the floor frame body 54. The lateral inner ridge 54b defines an angular corner between the inner sidewall 61 and the bottom wall 62. The lateral outer ridge 54b defines an angular corner between the outer sidewall 61 and the bottom wall 62. The lateral inner and outer ridges 54b, 54b are highly rigid to withstand a load directed longitudinally of the vehicular body. The extensions of the linear beads 71, 71 along the highly rigid ridges 54b, 54b enhance rigidity of the linear beads 71, 71.

The linear bead 71 includes projecting sidewalls 71a, 71b and a bottom wall 71c. The sidewalls 71a, 71b face laterally inwardly and outwardly of the vehicular body. The sidewalls 71a, 71b, the bottom wall 71c and the bottom wall 43 of the central cross member 33 cooperate to form a generally trapezoidal cross-sectional shape. The bottom wall 71c of the linear bead 71 is spaced a dimension H1 down from the bottom wall 43 of the central cross member 33 such that the bottom wall 71c is located below a head 58a of the fastening bolt 58. The head 58a of the fastening bolt 58 is received between the linear beads 71, 71 formed laterally internally and externally of the tightened portion 66 such that a lower surface 58b of the head 58a of the fastening bolt 58 is not located lower than the linear beads 71, 71. The head 58a of the fastening bolt 58 is thus protected by the linear beads 71, 71 formed laterally internally and externally of the tightened portion 66.

The left floor frame 38 and the right floor frame 38 are in symmetric relationship, and hence like reference numerals are used to denote respective elements of the left floor frame 38 corresponding to those of the right floor frame 38, and discussion of the left floor frame 38 will be omitted.

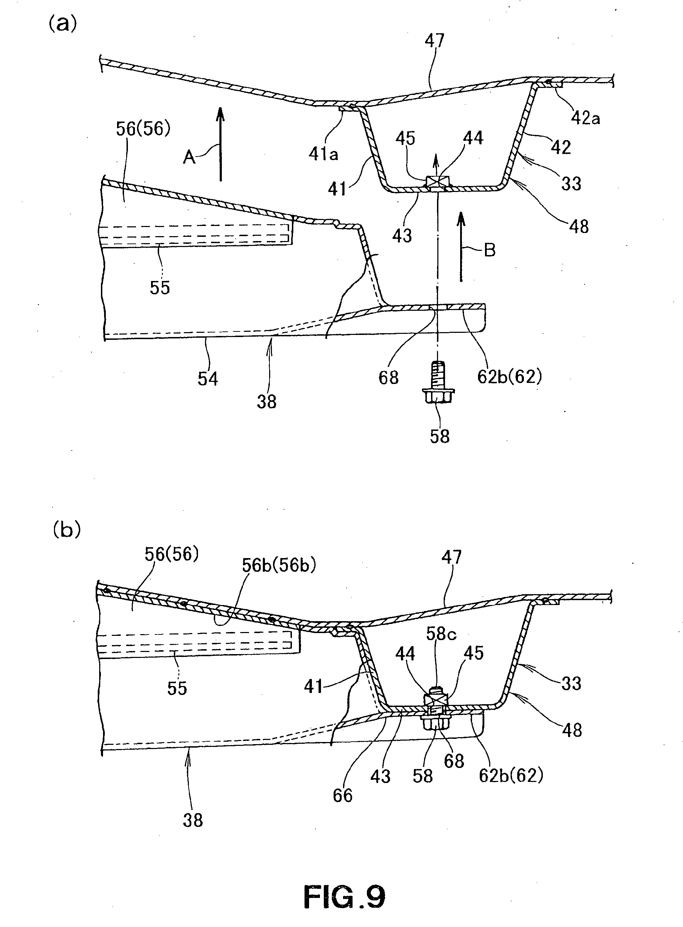

The right floor frame 38 can be attached to the front floor panel 47 and the central cross member 33 in a manner discussed below with reference to Figs. 9(a) and 9(b).

As shown in Fig. 9(a), the front floor panel 47 is placed on the top of the central cross member 33. The front and rear joining flanges 41a, 42a of the central cross member 33 are spot welded to the front floor panel 47 to thereby attach the central cross member 33 to the front floor panel 47. The central cross member 33 and the front floor panel 47 jointly define the closed cross-sectional structure 48.

Next, the frame lid 55 (Fig. 4) and the inner and outer frame legs 56, 56 are coupled to the floor frame body 54 to thereby form the right floor frame 38. The inner and outer frame legs 56, 56 of the right floor frame 38 are brought from below, as shown by an arrow A, into overlapping relationship with the front floor panel 47. Then, the bottom wall 62 (the rear end portion 62b) of the right floor frame 38 is brought from below, as shown by an arrow B, into overlapping relationship with the bottom wall 43 of the central cross member 33.

As shown in Fig. 9(b), the inner and outer frame legs 56, 56 of the right floor frame 38 underlie the front floor panel 47 in overlapping relationship therewith, and the rear end portion 62b of the bottom wall 62 underlies the bottom wall 43 of the central cross member 33 in overlapping relationship therewith. That is, a front part (the front and bottom walls 41, 43) of the front cross member 33 is sandwiched between the right floor frame 38 and the front floor panel 47.

The respective joining flanges 56b, 56b of the inner and outer frame legs 56, 56 are coupled to the front floor panel 47 by spot welding. The fastening bolt 58 is inserted through the attachment hole 44 of the bottom wall 43 and the attachment hole 68 of the rear end portion 62b (the tightened portion 66) of the bottom wall 62.

The shank 58c of the fastening bolt 58 projecting out of the attachment hole 44 of the bottom wall 43 threadedly engages the welded nut 45, such that the rear end portion 62b (more specifically, the tightened portion 66) of the bottom wall 62 is fastened to the bottom wall 43 of the central cross member 33 by the fastening bolt 58 in overlapping relationship with the bottom wall 43. This finishes a process of attaching the right floor frame 38 to the front floor panel 47 and the central cross member 33.

Since the fastening bolt 58 fastens the tightened portion 66 of the bottom wall 62 to the bottom wall 43 of the central cross member 33 with the tightened portion 66 overlapping the bottom wall 43, there is not necessity of spot welding the tightened portion 66 of the bottom wall 62 to the closed cross-sectional structure 48 defined by the central cross member 33 and the front floor panel 47. This means that the tightened portion 66 of the bottom wall 62 can be easily attached to the bottom wall 43 of the central cross member 33. This increases efficiency of assemblage of the vehicular floor structure 10.

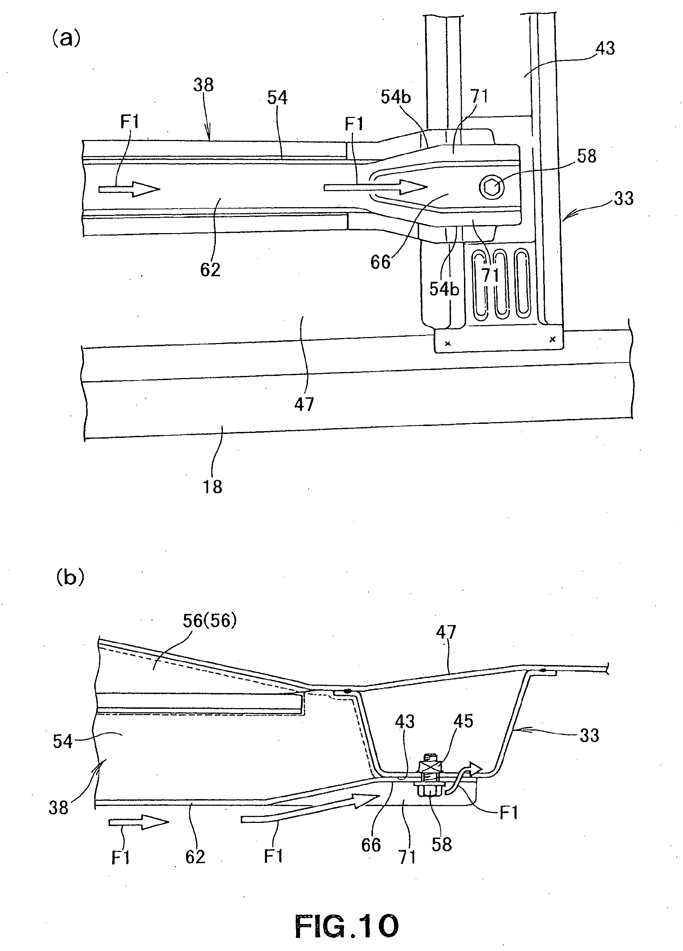

Discussions will be made with reference to Figs. 10(a) and (b) as to transmission of a load F1, applied to the front floor panel 47, to the central cross member 33.

Referring to Fig. 10(a), the tightened portion 66 of the bottom wall 62 is fastened to the bottom wall 43 of the central cross member 33 by the fastening bolt 58 with the tightened portion 66 overlapping the bottom wall 43. The tightened portion 66 is reinforced by the linear beads 71, 71 formed laterally internally and externally thereof.

When an impact load F1 is applied to a front part of the vehicular body in the rear direction of the vehicular body, the impact load F1 is transmitted from the front side frame 15 (Fig. 1) through the front end portion 38b (Fig. 1) of the right floor frame 38 toward the rear end portion 38a of the right floor frame 38. The load F1, which has been applied to the front end portion 38b in the rear direction of the vehicular body, as shown by an arrow, is efficiently transmitted to the tightened portion 66, as shown by an arrow.

Turning to Fig. 10(b), the load F1 which has been transmitted to the tightened portion 66 can be efficiently transmitted through the fastening bolt 58 to the central cross member 33, as shown by an arrow. The load F1, which has been transmitted through the fastening bolt 58 to the central cross member 33, is dispersed into the central cross member 33. That is, the load F1 can be borne by the central cross member 33 in a preferred manner.

Referring back to Fig. 10(a), the linear beads 71, 71 are formed along the inner and outer ridges 54b, 54b of the right floor frame 38. The inner and outer ridges 54b, 54b of the right floor frame 38 are highly rigid to withstand a load directed longitudinally of the vehicular body. The linear beads 71, 71 are highly rigid due to the ridges 54b, 54b, such that the load F1 applied to the front end portion 38b of the right floor frame 38 in the rear direction of the vehicular body can be more efficiently transmitted from the tightened portion 66 through the fastening bolt 58 to the central cross member 33.

One of various types of vehicles may be constructed such that the right floor frame 38 is not coupled to the front floor panel 47. Even in this case, the load F1 applied to the front end portion 38b of the right floor frame 38 can be efficiently transmitted to the fastening bolt 58 because the linear beads 71, 71 are highly rigid due to the inner and outer ridges 54b, 54b.

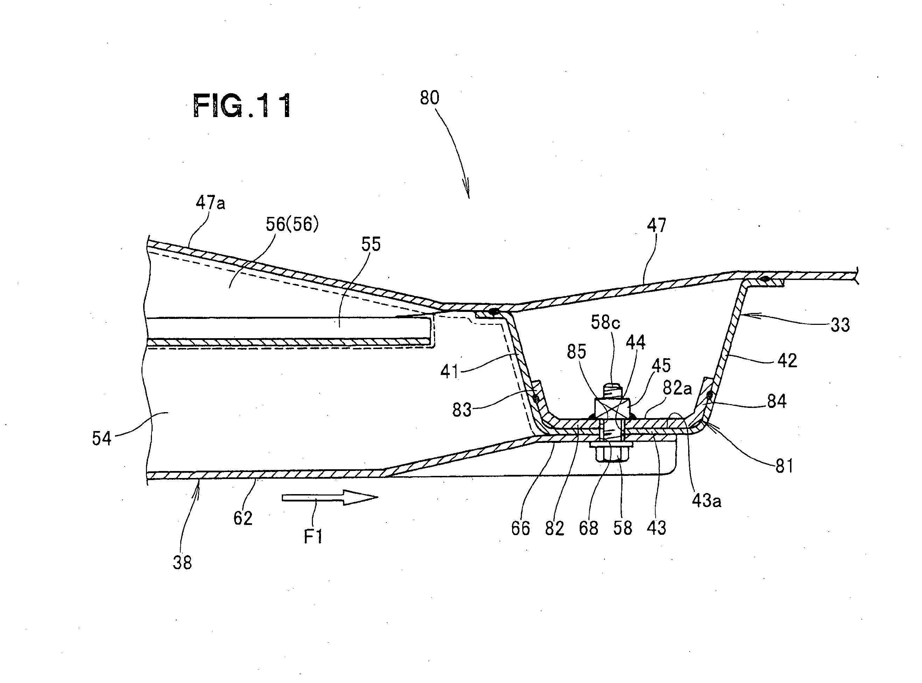

Embodiments 2 to 6 will be discussed with reference to Figs. 11 to 15. It is noted that like reference numerals are used to denote elements in the embodiments 2 to 6 corresponding to those in the embodiment 1, and hence discussion of the corresponding elements in the embodiments 2 to 6 will be omitted.

### Embodiment 2

As shown in Fig. 11, a vehicular floor structure 80 is designed in the same manner as the vehicular floor structure 10 except that the structure 80 includes a stiffener (reinforcement member) 81 carried by the central cross member 33 discussed in the embodiment 1.

The stiffener 81 is the reinforcement member disposed on the bottom wall 43 in the central cross member 33. The stiffener 81 includes a stiffener base 82 disposed on the inner surface 43a of the bottom wall 43. The stiffener 81 also includes a front sidewall 83 bent from a front end of the stiffener base 82, and a rear sidewall 84 bent from a rear end of the stiffener base 82.

The stiffener base 82 has an attachment hole 85 formed therethrough and an inner surface 82a to which is welded the welded nut 45. The welded nut 45 is coaxial with the attachment hole 85. With the stiffener base 82 being carried on the inner surface 43a of the bottom wall 43, the front sidewall 83 is spot welded to the front wall 41 and the rear sidewall 84 is spot welded to the rear wall 42, such that the stiffener 81 reinforces the central cross member 33.

The welded nut 45 and the attachment hole 85 are provided coaxially with the attachment holes 44, 68 of the bottom wall 43 and the tightened portion 66. The fastening bolt 58 is inserted through the attachment holes 68, 44, 85 with the shank 58c threadedly engaging the welded nut 45 to thereby fasten the tightened portion 66 of the right floor frame 38 to the bottom wall 43 and the stiffener 81.

The vehicular floor structure 80 in the embodiment 2 includes the central cross member 33 reinforced by the stiffener 81, and the right floor frame 38 having the tightened portion 66 fastened to the bottom wall 43 and the stiffener 81 by the fastening bolt 58. This allows a load F1 applied to the right floor frame 38 to be transmitted through the fastening bolt 58 to the central cross member 33 such that the load F1 is more efficiently dispersed into the central cross member 33. That is, the load F1 is borne by the central cross member 33 in a preferred manner.

### Embodiment 3

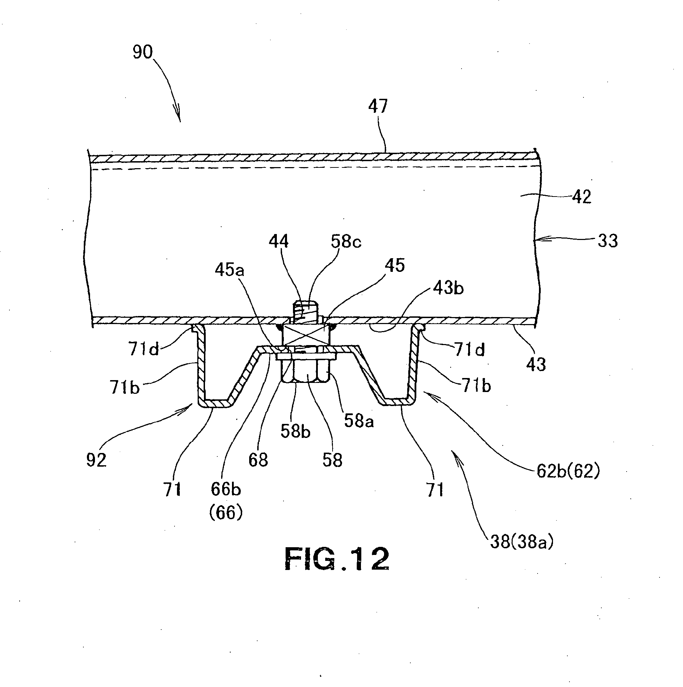

As shown in Fig. 12, a vehicular floor structure 90 in an embodiment 3 is designed in the same manner as the vehicular floor structure in the embodiment 1 except that the welded nut 45 is welded to an outer surface 43b of the bottom wall 43 of the central cross member 33.

In addition to being welded to the outer surface 43b of the bottom wall 43 of the central cross member 33, the welded nut 45 is coaxial with the attachment hole 44 of the bottom wall 43. Since the welded nut 45 underlies the outer surface 43b of the central cross member 33, the welded nut 45 projects downwardly from the bottom wall 43 (the outer surface 43b). The welded nut 45, which projects downwardly from the bottom wall 43, is received in the rear end portion 62b of the bottom wall 62.

The rear half 66b of the tightened portion 66 at the rear end portion 62b of the bottom wall 62 abuts on a bottom surface 45a of the welded nut 45 with the attachment hole 68 of the tightened portion 68 being coaxial with the welded nut 45.

The fastening bolt 58 is inserted through the attachment hole 68 of the tightened portion 66 and the shank 58c of the fastening bolt 58 threadedly engages the welded nut 45 to attach the tightened portion 66 to the bottom wall 43 of the central cross member 33 via the welded nut 45. The tightened portion 66 is spaced downwardly from the bottom wall 43 of the central cross member 33. The projecting sidewalls 71b, 71b each have an upper edge 71d abutting on the bottom wall 43 of the central cross member 33.

Since the tightened portion 66 is spaced downwardly from the bottom wall 43 of the central cross member 33, the rear end portion 62b of the bottom wall 62 cooperates with the bottom wall 43 of the central cross member 33 to form a closed cross-sectional structure 92 of larger area than that shown in the embodiment 1. It is noted that the tightened portion 66 overlaps the bottom wall 43 of the central cross member 33 in the embodiment 1.

The larger area of the closed cross-sectional structure 92 increases rigidity of the closed cross-sectional structure 92, such that a load F1 applied to the front end portion 38b (Fig. 1) of the right floor frame 38 in the rear direction of the vehicular body can be more efficiently transmitted to the central cross member 33 without deforming the rear end portion 38a of the right floor frame 38.

### Embodiment 4

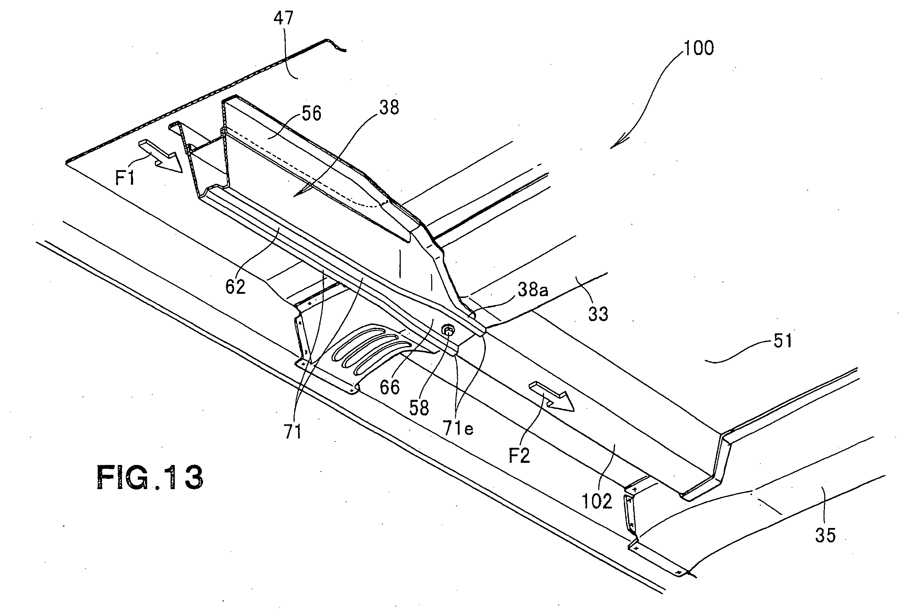

As shown in Fig. 13, a vehicular floor structure 100 in an embodiment 4 is designed in the same manner as the vehicular floor structure 10 in the embodiment 1 except that the linear beads 71, 71 are formed along the entire length of the right floor frame 38 and the rear floor panel 51 is provided with a panel bead 102.

The linear bead 71 is a reinforcing rib linearly extending throughout a length between the front end portion 38b (Fig. 1) of the right floor frame 38 and the rear end portion 38a of the right floor frame 38. The linear bead 71 defines a flat portion of the bottom wall 62 of the right floor frame 38, which portion extends longitudinally of the vehicular body. This makes it possible to adjust an air flowing along the bottom wall 62 of the right floor frame 38.

By extending throughout the length from the front end portion 38b to the rear end portion 38a of the right floor frame 38, the linear bead 71 can more efficiently transmit to the tightened portion 66 a load F1 applied to the front end portion 38b.

The panel bead 102 is located rearwardly of the central cross member 33 and is a reinforcing rib projecting downwardly. The panel bead 102 is formed integrally with the rear floor panel 51. The panel bead 102 extends continuously from a rear end portion 71e of the linear bead 71 in the rear direction of the vehicular body.

As best shown in Fig. 1, the front cross member 31, the central cross member 33, and the rear cross member 35 are arranged at given intervals longitudinally of the vehicular body. That is, the rear cross member 35 is located rearwardly of the central cross member 33. The panel bead 102 extends in the rear direction of the vehicular body. More specifically, the panel bead 102 is interposed between the rear cross member 35 and the rear end portion 71e of the linear bead 71.

With the right floor frame 38, the central cross member 33, the rear cross member 35, and the panel bead 102 arranged in the manner discussed above, part of a load F1 applied to the front end portion 38b of the right floor frame 38 can be efficiently transmitted through the fastening bolt 58 to the central cross member 33, after which the rest F2 of the load F1 can be transmitted through the panel bead 102 to the rear cross member 35. Therefore, the vehicular floor structure in the embodiment 4 is advantageous because the load F1 applied to the front end portion 38b of the right floor frame 38 can be borne in a preferred manner by dispersion into the two cross members (i.e., the central cross member 33 and the rear cross member 35).

The embodiment 4 has been discussed as showing an example where the linear bead 71 is disposed throughout the length of the right floor frame 38 and the rear panel 51 is provided with the panel bead 102, but the panel bead 102 may be removed from the rear floor panel 51 with the linear bead 71 extending throughout the length of the right floor frame 38. Alternatively, the liner bead 71 in the embodiment 1 may be used in place of the linear bead 71 in the embodiment 4, but no modification may be made to the rear floor panel 51 provided with the panel bead 102.

The embodiment 4 has been discussed as showing the panel bead 102 formed integrally with the rear panel 51, but the panel bead 102 may be separate from the rear floor panel 51 in which case the panel bead 102 may be coupled to the rear floor panel 51 by spot welding or fastening bolts.

If the panel bead 102 is to be separate from the rear floor panel 51, a degree of freedom to determine a shape of the panel bead 102 may be enhanced. Thus, the panel bead 102 may be shaped such that a load F1 applied to the right floor frame 38 can be more efficiently transmitted in the rear direction of the vehicular body.

### Embodiment 5

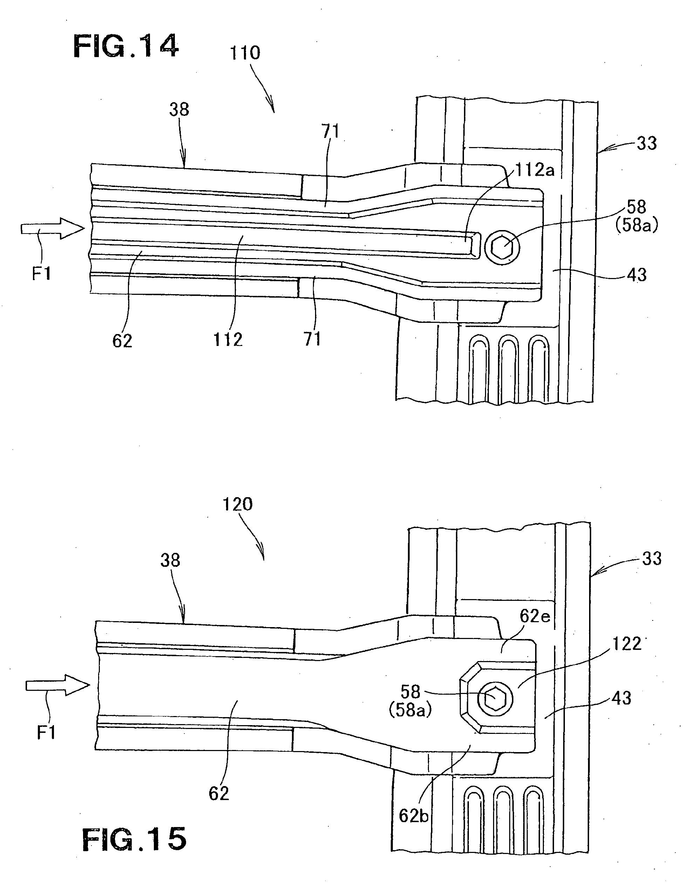

As shown in Fig. 14, a vehicular floor structure 110 in an embodiment 5 is designed in the same manner as the vehicular floor structure 100 in the embodiment 4 except that a linear central bead 112 extends between the linear beads 71, 71.

The central linear bead 112 is the reinforcing rib formed between the linear beads 71, 71 disposed laterally internally and externally of the bottom wall 62, which rib extends toward the head 58a of the fastening bolt 58. The central linear bead 112 has a rear end portion 112a located proximate the head 58a of the fastening bolt 58.

Part of a load F1 applied to the front end portion 38b (Fig. 1) of the right floor frame 38 in the rear direction of the vehicular body can be efficiently transmitted through the central linear bead 112 to the head 58a of the fastening bolt 58. Thereafter, the load F1 can be more efficiently transmitted through the fastening bolt 58 to the central cross member 33.

### Embodiment 6

As shown in Fig. 15, a vehicular floor structure 120 in an embodiment 6 is designed in the same manner as the vehicular floor structure 10 in the embodiment 1 except that the rear end portion 62b of the bottom wall 62 has a tightened portion 122 fastened to the central cross member 33 at a location 62e corresponding to the bottom wall 43 of the central cross member 33.

The tightened portion (i.e., recessed portion) 122 is formed at the location 62e corresponding to the bottom wall 43 of the central cross member 33 and is smaller in size than the tightened portion 66 in the embodiment 1. This means that the rear end portion 62b of the bottom wall 62 has a recess of smaller size increasing rigidity of the right floor frame 38, such that a load F1 applied to the front end portion 38a of the right floor frame 38 in the rear direction of the vehicular body can be more efficiently transmitted through the tightened portion 122 of the right floor frame 38 to the central cross member 33.

The vehicular floor structure according to the present invention is not limited to any of the embodiments discussed above, but various modifications or changes may be made to the vehicular floor structure. For example, the cross-sectional shape of the linear bead 71 is not limited to a generally trapezoidal shape shown in the embodiment 1, but may be a generally triangular shape or a generally arc shape.

It is noted that the fastening means 57 is not limited to the fastening bolt 58 and the welded nut 45, but may be other fasteners such as a clip.

The embodiments 1 to 6 show the rear end portion 62b of the bottom wall 62 as overlapping the bottom wall 43 and being connected through the fastening bolt 58 to the bottom wall 43 of the central cross member 33, but the rear end portion 62b of the bottom wall 62 may be connected to the bottom wall 43 of the central cross member 33 with rear end portions of the inner and outer sidewalls 39, 39 being connected to the front wall 41 of the central cross member 33 by the fastening bolt 58 or the like.

The embodiments 1 to 6 show use of a single fastening bolt 58 fastening the tightened portion 66 or 122 to the bottom wall 43 of the central cross member 33, but a plurality of fastening bolts may be arranged longitudinally of the vehicular body for fastening the tightened portion to the bottom wall of the central cross member. Use of the plural fastening bolts 58 to fasten the tightened portions 66, 122 prevents rotation of the right floor frame 38 about the fastening bolt.

It is noted that the vehicular floor structures 10, 80, 90, 100, 110, 120, the left and right front side frames 15, 15, the central cross member 33, the left and right floor frames 38, 38, the lateral inner and outer sidewalls 39, 39, the front and rear walls 41, 42, the bottom wall 43, the outer surface 43b of the bottom wall 43, the front floor panel 47, the closed cross-sectional structure 48, the lateral inner and outer ridges 54b, 54b, the bottom wall 62, the tightened portions 66, 122, the linear beads 71, 71, the stiffener 81, the panel bead 102 and the linear central bead 112 may be modified to have shapes or configurations other than those shown in the embodiment discussed above.

### INDUSTRIAL APPLICABILITY

The vehicular floor structure according to the present invention is suitable for use in an automobile including a floor frame having a rear end portion connected to a cross member, and a floor panel cooperating with the floor frame to form a closed cross-sectional structure.

### Reference Signs List:

10, 80, 90, 100, 110, 120...vehicular floor structures; 15...left and right front side frames; 15a...rear end portions of the left and right front side frames; 33...central cross member; 38....left and right floor frames; 38a...rear end portions of the left and right floor frames; 38b... front end portions of the left and right floor frames; 39...lateral inner and outer sidewalls; 41, 42...front and rear walls; 43...bottom wall; 43b...outer surface; 45...welded nut; 47...floor panel; 48...closed cross-sectional structure; 54b...lateral inner and outer ridges; 58...fastening member; 58a...head of the fastening member; 62...bottom wall; 62e...location corresponding to the bottom wall of the central cross member; 66, 122...tightened portions; 71...lateral inner and outer linear beads; 71c...bottom wall; 71e...rear end portions of the linear beads; 81...stiffener; 102...panel bead; 112...linear central bead

## Claims

1. A vehicle floor structure comprising:
front side frames;
a floor frame (38) extending rearwardly from each of rear end portions of the front side frames, the floor frame (38) having inner and outer sidewalls (39) facing laterally inwardly and outwardly of a vehicular body, and a bottom wall (43), the inner and outer walls (39) and the bottom wall (43) defining a generally U-shaped cross-section;
a cross member connected to a rear end portion of the floor frame (38);
a floor panel (47) carried on the floor frame (38);
a closed cross-sectional structure (48) defined by the floor frame (38) and the floor panel (47) carried on the floor frame (38); and downwardly projecting linear beads (71);
**characterized by** the vehicle floor structure comprising
a fastening member (58) fastening the bottom wall (43) of the floor frame (38) at the rear end portion (38a) of the floor frame (38) to a bottom wall of the cross member, the bottom wall (43) of the floor frame (38) overlapping the bottom wall of the cross member, the bottom wall (43) of the floor frame (38) having a tightened portion (66) tightened by the fastening member (58);
wherein the downwardly projecting linear beads (71) are disposed laterally internally and externally of the tightened portion (66),
wherein the linear beads (71) project downwardly such that the fastened portion (66) is recessed relative to the linear beads (71),
wherein the floor panel (47) has downwardly projecting panel beads (102) located rearwardly of the cross member, the panel beads (102) each continuously extending rearwardly from rear ends of the linear beads (71),
wherein the linear beads (71) are formed along ridges of the floor frame (38), and
wherein the rear end portion (38a) of the floor frame (38) gradually increase in width.

2. The structure of claim 1, wherein the linear beads (71) have bottom walls located lower than a head (58a) of the fastening member (58).

3. The structure of claim 1, wherein the linear beads (71) are formed throughout a length between a front end portion (38b) of the floor frame (38) and the rear end portion (38a) of the floor frame (38).

4. The structure of claim 1, wherein the floor frame (38) underlies the floor panel (47) and the cross member in overlapping relationship with the floor panel (47) and the cross member with the cross member being sandwiched between the floor panel (47) and the floor frame (38), the inner and outer sidewalls of the floor frame (38) being spot welded to the floor panel (47), the bottom wall (43) of the floor frame (38) at the rear end portion (38a) of the floor frame (38) being fastened to the bottom wall of the cross member by the fastening member (58).

5. The structure of claim 1, wherein the fastening member (58) is a bolt tightened by a nut disposed on an outer surface (43b) of the bottom wall of the cross member.

6. The structure of claim 1, wherein the floor frame has a linear central bead (112) extending toward a head (58a) of the fastening member (58) between the linear beads (71).

7. The structure of claim 1, wherein the tightened portion (66) is provided at a location corresponding to the bottom wall of the cross member.

## Patentansprüche

1. Fahrzeugbodenstruktur umfassend:
Frontseitenrahmen;
einen Bodenrahmen (38), welcher sich heckwärts von jedem von Heckendteilen der Frontseitenrahmen erstreckt, wobei der Bodenrahmen (38) innere und äußere Seitenwände (39) aufweist, welche lateral nach innen und nach außen bezüglich einer Fahrzeugkarosserie gewandt sind, und eine Bodenwand (43), wobei die inneren und äußeren Wände (39) und die Bodenwand (43) einen im Wesentlichen U-förmigen Querschnitt definieren;
einen Querträger, welcher mit einem Heckendteil des Bodenrahmens (38) verbunden ist;
ein Bodenpaneel (47), welches an dem Bodenrahmen (38) getragen ist;
eine Struktur (48) mit geschlossenem Querschnitt, definiert durch den Bodenrahmen (38) und das Bodenpaneel (47), welches an dem Bodenrahmen (38) getragen ist; und
abwärts hervorragende lineare Sicken (71);
**dadurch gekennzeichnet, dass** die Fahrzeugbodenstruktur umfasst:
ein Befestigungselement (58), welches die Bodenwand (43) des Bodenrahmens (38) an dem Heckendteil (38a) des Bodenrahmens (38) an einer Bodenwand des Querträgers befestigt, wobei die Bodenwand (43) des Bodenrahmens (38) die Bodenwand des Querträgers überlappt, wobei die Bodenwand (43) des Bodenrahmens (38) ein festgemachtes Teil (66) aufweist, welches durch das Befestigungselement (58) festgemacht ist;
wobei die abwärts hervorragenden linearen Sicken (71) lateral intern und extern des festgemachten Teils (66) angeordnet sind,
wobei die linearen Sicken (71) so abwärts hervorragen, dass das festgemachte Teil (66) relativ zu den linearen Sicken (71) eingelassen ist,
wobei das Bodenpaneel (47) abwärts hervorragende Paneelsicken (102) aufweist, welche heckwärts des Querträgers gelegen sind, wobei jede der Paneelsicken (102) sich kontinuierlich heckwärts von Heckenden der linearen Sicken (71) erstreckt,
wobei die linearen Sicken (71) entlang von Erhöhungen des Bodenrahmens (38) ausgebildet sind, und
wobei das Heckendteil (38a) des Bodenrahmens (38) allmählich in einer Breite zunimmt.

2. Struktur nach Anspruch 1, wobei die linearen Sicken (71) Bodenwände aufweisen, welche niedriger als ein Kopf (58a) des Befestigungselements (58) gelegen sind.

3. Struktur nach Anspruch 1, wobei die linearen Sicken (71) über eine Länge zwischen einem Frontendteil (38b) des Bodenrahmens (38) und des Heckendteils (38a) des Bodenrahmens (38) ausgebildet sind.

4. Struktur nach Anspruch 1, wobei der Bodenrahmen (38) unterhalb des Bodenpaneels (47) und des Querträgers liegt, in überlappender Beziehung mit dem Bodenpaneel (47) und dem Querträger, wobei der Querträger zwischen dem Bodenpaneel (47) und dem Bodenrahmen (38) in einer Sandwichbauart angeordnet ist, wobei die inneren und äußeren Seitenwände des Bodenrahmens (38) an dem Bodenpaneel (47) Punktgeschweißt sind, wobei die Bodenwand (43) des Bodenrahmens (38), an dem Heckendteil (38a) des Bodenrahmens (38), an der Bodenwand des Querträgers durch das Befestigungselement (58) befestigt ist.

5. Struktur nach Anspruch 1, wobei das Befestigungselement (58) ein Bolzen ist, welcher durch eine Mutter festgemacht ist, welche an einer äußeren Fläche (43b) der Bodenwand des Querträgers angeordnet ist.

6. Struktur nach Anspruch 1, wobei der Bodenrahmen eine lineare Zentralsicke (112) aufweist, welche sich in Richtung eines Kopfs (58a) das Befestigungselements (58) zwischen den linearen Sicken (71) erstreckt.

7. Struktur nach Anspruch 1, wobei das festgemachte Teil (66) an einem Ort bereitgestellt ist, welcher der Bodenwand des Querträgers entspricht.

## Revendications

1. Structure de plancher de véhicule comprenant :
des cadres latéraux avant ;
un cadre de plancher (38) s'étendant vers l'arrière à partir de chacune des portions d'extrémité arrière des cadres latéraux avant, le cadre de plancher (38) ayant des parois latérales interne et externe (39) orientées latéralement vers l'intérieur et vers l'extérieur d'une carrosserie de véhicule, et une paroi inférieure (43), les parois interne et externe (39) et la paroi inférieure (43) définissant une section généralement en forme de U ;
une traverse raccordée à une portion d'extrémité arrière du cadre de plancher (38) ;
un panneau de plancher (47) porté sur le cadre de plancher (38) ;
une structure en coupe fermée (48) définie par le cadre de plancher (38) et le panneau de plancher (47) porté sur le cadre de plancher (38) ; et
des baguettes linéaires faisant saillie vers le bas (71) ;
**caractérisée en ce que** la structure de plancher de véhicule comprend
un organe de fixation (58) fixant la paroi inférieure (43) du cadre de plancher (38) au niveau de la portion d'extrémité arrière (38a) du cadre de plancher (38) à une paroi inférieure de la traverse, la paroi inférieure (43) du cadre de plancher (38) chevauchant la paroi inférieure de la traverse, la paroi inférieure (43) du cadre de plancher (38) ayant une portion serrée (66) serrée par l'organe de fixation (58) ;
dans laquelle les baguettes linéaires faisant saillie vers le bas (71) sont disposées de façon interne et externe latéralement par rapport à la portion serrée (66),
dans laquelle les baguettes linéaires (71) font saillie vers le bas de sorte que la portion fixée (66) soit en retrait par rapport aux baguettes linéaires (71),
dans laquelle le panneau de plancher (47) a des baguettes de panneau faisant saillie vers le bas (102) situées vers l'arrière de la traverse, les baguettes de panneau (102) s'étendant chacune de façon continue vers l'arrière à partir des extrémités arrière des baguettes linéaires (71),
dans laquelle les baguettes linéaires (71) sont formées le long de stries du cadre de plancher (38), et
dans laquelle la largeur de la portion d'extrémité arrière (38a) du cadre de plancher (38) augmente progressivement.

2. Structure selon la revendication 1, dans laquelle les baguettes linéaires (71) ont des parois inférieures situées plus bas qu'une tête (58a) de l'organe de fixation (58).

3. Structure selon la revendication 1, dans laquelle les baguettes linéaires (71) sont formées sur toute une longueur entre une portion d'extrémité avant (38b) du cadre de plancher (38) et la portion d'extrémité arrière (38a) du cadre de plancher (38).

4. Structure selon la revendication 1, dans laquelle le cadre de plancher (38) est sous le panneau de plancher (47) et la traverse en relation de chevauchement avec le panneau de plancher (47) et la traverse, la traverse étant enserrée entre le panneau de plancher (47) et le cadre de plancher (38), les parois latérales interne et externe du cadre de plancher (38) étant soudées par points au panneau de plancher (47), la paroi inférieure (43) du cadre de plancher (38) au niveau de la portion d'extrémité arrière (38a) du panneau de plancher (38) étant fixée à la paroi inférieure de la traverse par l'organe de fixation (58).

5. Structure selon la revendication 1, dans laquelle l'organe de fixation (58) est un boulon serré par un écrou disposé sur une surface externe (43b) de la paroi inférieure de la traverse.

6. Structure selon la revendication 1, dans laquelle le cadre de plancher a une baguette centrale linéaire (112) s'étendant vers une tête (58a) de l'organe de fixation (58) entre les baguettes linéaires (71).

7. Structure selon la revendication 1, dans laquelle la portion serrée (66) est ménagée au niveau d'un emplacement correspondant à la paroi inférieure de la traverse.
